# EUROPÄISCHE PATENTSCHRIFT

(11) **EP 1 104 557 B1**
(45) Veröffentlichungstag und Bekanntmachung des Hinweises auf die Patenterteilung: **31.10.2001**
(21) Anmeldenummer: 00953174.0
(22) Anmeldetag: 16.08.2000
(51) Int. Cl.: G06F 3/033

(54) **MOUSE FÜR EINEN PC MIT INTERNET-ANSCHLUSS**
MOUSE FOR A PC COMPRISING AN INTERNET TERMINAL CONNECTION
SOURIS D'ORDINATEUR PERSONNEL AVEC CONNEXION INTERNET

(30) Priorität: 16.08.1999 DE 19938744
(43) Veröffentlichungstag der Anmeldung: 06.06.2001
(73) Patentinhaber: Ultratronik Entwicklungs GmbH, 82211 Herrsching (DE)
(72) Erfinder: SORG, Wolfgang, 82211 Herrsching (DE); PUST, Hubert, 82211 Herrsching (DE)
(74) Vertreter: Schmidt-Evers, Jürgen, Dipl.-Ing.
(86) Internationale Anmeldenummer: EP0008038
(87) Internationale Veröffentlichungsnummer: WO0113212

(56) Entgegenhaltungen:
- EP-A- 0 814 419
- US-A- 5 774 869
- US-A- 5 937 164
- PATENT ABSTRACTS OF JAPAN vol. 1999, no. 09, 30. Juli 1999 (1999-07-30) & JP 11 120129 A (NET VILLAGE KK), 30. April 1999 (1999-04-30)
- PATENT ABSTRACTS OF JAPAN vol. 1995, no. 04, 31. Mai 1995 (1995-05-31) & JP 07 028594 A (SHARP CORP), 31. Januar 1995 (1995-01-31)

## Beschreibung

Die Erfindung betrifft eine Mouse für einen PC mit Internet-Anschluß.

PC's der jüngeren Generation arbeiten mit Windows-Betriebssystemen (z.B. Windows von Microsoft, Unix, Linux oder dgl.). Diese Betriebssysteme generieren auf dem Bildschirm grafische Symbole, die mit einem Zeiger oder Curser angefahren werden können. Durch Anklicken dieser Symbole werden bestimmte Befehle für den PC realisiert. Das Bewegen des Zeigers auf dem Bildschirm zu den einzelnen Symbolen sowie das Anklicken dieser Symbole erfolgt durch eine Mouse. Dabei handelt es sich um ein handliches Gerät, welches auf einer griffigen Unterlage mit der Hand hin und her geschoben wird. Jede Verschiebung hat eine Verstellung des Zeigers auf dem Bildschirm zur Folge. Die Mouse ist dazu über ein flexibles Kabel mit dem PC verbunden.

Eine Mouse hat in der Regel mindestens zwei Tasten, wobei die linke Mousetaste zum Anklicken eines Windows-Symbols auf dem Bildschirm dient. Die rechte Mousetaste ist u.a. zum Aufrufen eines Context-Menüs bestimmt.

Neben den üblichen Mouse-Exemplaren mit zwei Tasten sind zwischenzeitlich auch Mouse-Exemplare bekanntgeworden, die mindestens eine zusätzliche Taste haben. So ist beispielsweise schon vorgeschlagen worden, die Mouse auch mit den üblichen Telefon-Nummerntasten zu belegen. Dies um mit der Mouse nicht nur den PC zu steuern, sondern um damit zusätzlich noch bestimmte Telefonnummern aufrufen zu können. Letzteres ist dann sinnvoll, wenn der PC - wie heute meistens üblich - über die normale Telefonleitung mit kommerziellen oder öffentlichen Netzen, wie beispielsweise dem Internet, verbunden ist. Sofern nur eine analoge Telefonleitung zur Verfügung steht, muß der PC ein sogenanntes Modem enthalten, welches die digitalen Signale des PC in analoge Signale umwandelt. Um eine Verbindung mit dem Internet aufnehmen zu können, muß vom PC aus die Telefonnummer eines sogenannten Servers angewählt werden, der ein End-Knotenpunkt des Internet ist. Ein üblicher Server ist beispielsweise in Deutschland T-Online mit der Telefonnummer 0191011. Der Server wandelt seinerseits die ihm zugeführten Telefonsignale in Daten-Pakete um. die dann im Internet über verschiedene Wege zu anderen Servern geschickt werden.

Jeder Server hat seinerseits eine Internet-Nummer. Die an den Server angeschlossenen PC's haben ihrerseits ebenfalls spezielle Nummern. Ein PC kann über das Internet mit einem anderen PC dadurch Verbindung aufnehmen, daß von dem erstgenannten PC aus eine sogenannte URL-Adresse gewählt wird. Diese enthält die Adresse des angewählten Servers sowie des mit diesem verbundenen PC's. Damit ein über den Server mit dem Internet verbundener PC die Internet-Informationen auswerten bzw. Internet-Informationen versenden kann, muß die Software des PC einen sogenannten Browser enthalten. Bekannte Browser sind beispielsweise der Netscape-Navigator der Firma Netscape oder der Internet-Explorer der Firma Microsoft.

Damit der PC die ihm von einer Mouse übermittelten Befehle lesen und ausführen kann, muß er eine sogenannte Mouse-Treiber-Software enthalten. Für PC's mit älteren Betriebssystemen wurde die Mouse-Treiber-Software mit der Mouse mitgeliefert und mußte separat geladen werden. Die heutigen modernen Betriebssysteme enthalten in der Regel eine Mouse-Treiber-Bibhothek, aus der die geeignete Mouse-Treiber-Software nach Anschließen der Mouse ausgewählt werden kann.

Wie erwähnt, wird die Mouse zur Betätigung, d.h. zum Verschieben des Zeigers auf dem Bildschirm, auf einer griffigen Unterlage bewegt. Die Unterlage besteht normalerweise aus einem sogenannten Mouse-Pad. Es handelt sich dabei um eine flache Matte aus elastischem Kunststoff, auf der die unten an der Mouse vorgesehene Kugel gut abrollen kann. Ein solches Mouse-Pad eignet sich vorzüglich als Werbegeschenk. Die werbende Partei druckt dazu in der Regel das Firmenlogo, die Postadresse und die Internet-Adresse auf das Mouse-Pad auf. Die benutzende und beworbene Partei hat dadurch jederzeit die notwendigen Informationen zur Hand, um auf Wunsch mit der werbenden Partei in Kontakt zu treten. Sie wird dies nur bei Bedarf tun.

Der vorliegenden Erfindung liegt die Aufgabe zugrunde, die Wahrscheinlichkeit, daß eine beworbene Partei mit der werbenden Partei in Kontakt tritt, erheblich erhöht wird.

Die erfindungsgemäße Lösung besteht darin, daß die werbende Partei der beworbenen Partei eine Mouse mit einer dazu gehörenden Initialisierungs-Software für einen PC zum Gebrauch überläßt oder übereignet. Damit die beworbene Partei die Mouse benutzen d.h. in Funktion setzen kann, muß sie die Initialisierungs-software in ihren PC laden. Die Initialisierungs-Software setzt dann nicht nur die Mouse in Funktion. sondern veranlaßt den PC nach Aktivierung des Internet-Anschlusses automatisch eine ausgewählte Internet-Adresse aufzurufen. Eine Weiterbildung der Erfindung kann darin bestehen, daß Initialisierungs-Software nach dem In-Funktion-Setzen der Mouse automatisch den Internet-Anschluß aktiviert.

Die ausgewählte Internet-Adresse ist zweckmäßigerweise diejenige, mit der die home-page der werbenden Partei im Internet aufgerufen wird.

Die Initialisierungs-Software kann isoliert zur Verfügung gestellt werden. Alternativ dazu besteht aber auch die Möglichkeit, daß die Initialisierungs-Software als Teil einer entsprechend erweiterten Mouse-Treiber-Software zur Verfügung gestellt wird.

Eine zweckmäßige Ausgestaltung der Erfindung kann darin bestehen, daß die Initialisierungs-Software die ausgewählte Internet-Adresse als Startadresse des Browsers setzt.

Eine andere Weiterbildung der Erfindung kann darin bestehen, daß die Mouse eine zusätzliche Taste aufweist, die mit dem Befehl belegt ist, die Initialisierungs-Software zu veranlassen, die ausgewählte Internet-Adresse aufzurufen.

Die Initialisierungs-Software kann z.B. auf einer Diskette, einer CD-ROM oder dgl. zusammen mit der Mouse zur Verfügung gehalten werden.

In diesem Zusammenhang sei erwähnt, daß es bekannt ist (US 5, 774, 869 und EP 0 814 419 A2), daß eine werbende Partei einer beworbenen Partei einen Datendräger für einen PC, wie eine Diskette oder eine CD-ROM, zur Verfingung stellt, wobei der Datenträger neben Werbeinformationen ein Programm endhält, welches auf Initiative der beworbenen Partei eine Internet-Verbindung zu der homepage der werbenden Partei werstellt. Ein Zusammenhang mit einer Initialisierungs-Software für eine mouse ist nicht offenbart.

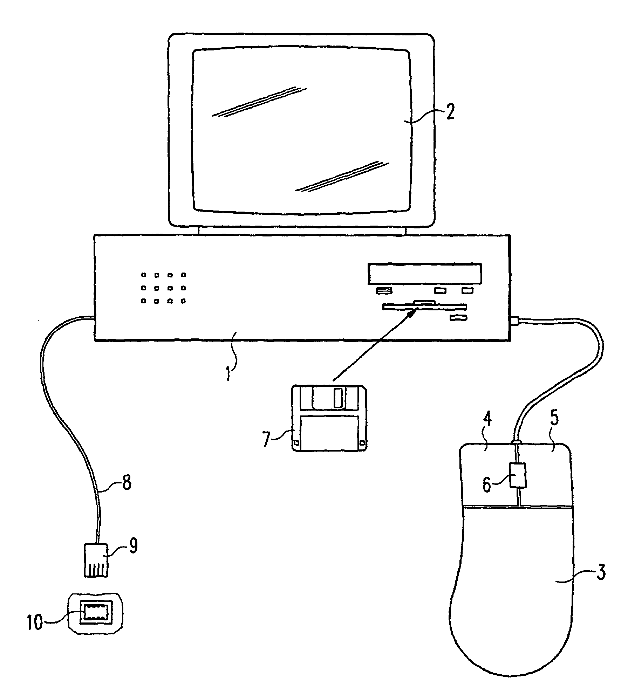

Ein Ausführungsbeispiel der hardwaremäßigen Realisierung der Erfindung wird anhand der beigefügten Zeichnung beschrieben.

Die Zeichnung zeigt einen PC 1 mit einem Bildschirm 2. An dem PC ist über ein flexibles Kabel eine Mouse 3 angeschlossen. Die Mouse 3 weist die beiden üblichen Tasten 4 und 5 auf. Die linke Taste 4 dient normalerweise zum Anklicken von Windows-Symbolen. Die rechte Taste 5 dient u.a. zum Aufrufen eines Context-Menüs.

Die Mouse 3 weist ferner eine dritte Taste 6 auf. Die Taste 6 ist mit dem Befehl belegt, daß nach dem Starten des PC's automatisch der Internet-Anschluß aktiviert und eine ausgewählte Internet-Adresse aufgerufen wird. Die ausgewählte Internet-Adresse gewährleistet, daß auf dem Bildschirm 2 die entsprechende home-page erscheint.

Zu der Mouse 3 gehört eine Mouse-Treiber-Software, die auf eine Diskette 7 aufgespielt ist. Die Diskette 7 muß in den Diskettenschlitz des PC's eingeschoben werden, damit die Mouse 3 von dem Benutzer des PC 1 in Funktion gesetzt, d.h. tatsächlich benutzt werden kann.

Der PC 1 ist - wie dargestellt - über eine Verbindungskabel 8 und einen Stecker 9, der in eine Telefon-Steckdose 10 einzustecken ist, an das Telefonnetz angeschlossen und kann dadurch mit dem Internet in Verbindung treten.

Nach dem Laden des PC mit der auf der Diskette 7 befindlichen Initialisierungs-Software kann die Mouse 3 nicht nur bestimmungsgemäß benutzt werden. Vielmehr kann durch Drücken der Taste 6 an der Mouse 3 der Belegungsbefehl dieser Taste realisiert werden. Das bedeutet, daß die ausgewählte Internet-Adresse aufgerufen wird, so daß - vorausgesetzt der Internet-Anschluß zu dem PC ist aktiviert - auf dem Bildschirm 2 die der ausgewählten Interner-Adresse zugeordnete home-page erscheint.

Unterstellt man, daß die Mouse 3 mit der die Initialisierungs-Software enthaltenden Diskette 7 ein Werbegeschenk einer werbenden Partei an eine beworbene Partei ist. so bietet es sich für die werbende Partei an, als ausgewählte Adresse diejenige zu verwenden, die das Erscheinen ihrer eigenen home-page auf dem Bildschirm 2 der beworbenen Partei veranlaßt.

## Patentansprüche

1. Mouse (3) für einen PC (1, 2) mit Internet-Anschluß (8, 9, 10)
**gekennzeichnet durch** eine dazugehörige Initialisierungs-Software (7), mit der der PC (1, 2) für das Inbetriebsetzen der Mouse (3) zu laden ist und die dann nach Aktivierung des Internet-Anschlußes (8, 9, 10) automatisch eine ausgewählte Internet-Adresse aufruft.

2. Mouse (3) nach Anspruch 1
**dadurch gekennzeichnet, daß** die Initialisierungs-Software (7) nach dem In-Funktion-Setzen der Mouse (3) automatisch den Internet-Anschluß (8, 9, 10) aktiviert.

3. Mouse (3) nach Anspruch 1 oder 2,
**dadurch gekennzeichnet,**
**daß** die Initialisierungs-Software (7) eine Erweiterung der Mouse-Treiber-Software ist.

4. Mouse (3) nach einem der Ansprüche 1-3,
**dadurch gekennzeichnet,**
**daß** die Initialisierungs-Software (7) die ausgewählte Internet-Adresse als Startadresse des Internet-Browsers setzt.

5. Mouse (3) nach einem der vorherstehenden Ansprüche,
**dadurch gekennzeichnet,**
**daß** die Mouse (3) eine zusätzliche Taste (6) aufweist, die mit dem Befehl belegt ist, die Initialisierungs-Software (7) zu veranlassen, die ausgewählte Internet-Adresse aufzurufen.

6. Mouse (3) nach einem der vorherstehenden Ansprüche.
**dadurch gekennzeichnet.**
**daß** die Initialisierungs-Software auf einer Diskette (7), einer CD-ROM oder dgl. mit der Mouse (3) zur Verfügung gehalten wird.

7. Mouse (3) nach einem der vorherstehenden Ansprüche,
**dadurch gekennzeichnet,**
**daß** die Mouse (3) mit der Initialisierungs-Software (7) zur Weitergabe einer gebenden Partei an eine nehmende Partei bestimmt ist, und daß die ausgewählte Internet-Adresse diejenige ist, mit der die home-page der gebenden Partei im Internet aufgerufen wird.

## Claims

1. Mouse (3) for a PC (1, 2) having an internet connection (8, 9, 10)
**characterised by** associated initialization software (7) with which the PC (1, 2) is to be loaded in order to bring the mouse (3) into operation and which then after activation of the internet connection (8, 9, 10) automatically calls up a selected internet address.

2. Mouse (3) according to claim 1,
**characterised in that** the initialization software (7) automatically activates the internet connection (8, 9, 10) after the mouse (3) is allowed to function.

3. Mouse (3) according to claim 1 or 2,
**characterised in that**,
the initialization software (7) is an extension of the mouse driver software.

4. Mouse (3) according to any of claims 1 to 3,
**characterised in that**,
the initialization software (7) sets the selected internet address as the start address of the internet browser.

5. Mouse (3) according to any preceding claim,
**characterised in that**,
the mouse (3) has an additional button (6) which is occupied of with the command to cause the initialization software (7) to call up the selected internet address.

6. Mouse (3) according to any preceding claim,
**characterised in that**,
the initialization software is made available on a diskette (7), a CD-ROM or the like, with the mouse (3).

7. Mouse (3) according to any preceding claim,
**characterised in that**,
the mouse (3) with the initialization software (7) is intended to be given by a giving party to a receiving party, and **in that** the selected internet address is that with which the home page of the giving party is called up in the internet.

## Revendications

1. Souris (3) pour un ordinateur personnel ou PC (1,2) avec connexion internet (8,9,10), **caractérisée par** un logiciel d'initialisation correspondant (7), avec lequel le PC (1,2) doit être chargé pour la mise en service de la souris (3) et qui ensuite, après activation de la connexion internet (8,9,10) appelle automatiquement une adresse internet choisie.

2. Souris (3) selon la revendication 1, **caractérisée en ce que** le logiciel d'initialisation (7), après la mise en fonction de la souris (3) active automatiquement la connexion internet (8,9,10).

3. Souris (3) selon la revendication 1 ou 2,
**caractérisée en ce que**,
le logiciel d'initialisation (7) est une extension du logiciel de gestion souris,

4. Souris (3) selon l'une des revendications 1-3,
**caractérisée en ce que**,
le logiciel d'initialisation (7) fixe l'adresse internet choisie comme adresse de départ du navigateur (browser) internet.

5. Souris (3) selon l'une des revendications précédentes,
**caractérisée en ce que**,
la souris (3) présente une touche supplémentaire (6) qui comporte l'instruction de lancement du logiciel d'initialisation (7) de façon à appeler l'adresse internet choisie.

6. Souris (3) selon l'une des revendications précédentes,
**caractérisée en ce que**,
le logiciel d'initialisation est tenu à disposition sur une disquette (7), un CD-ROM ou analogue, avec la souris (3).

7. Souris (3) selon l'une des revendications précédentes,
**caractérisée en ce que**,
la souris (3) comportant le logiciel d'initialisation (7) est destinée à la mise en communication d'un correspondant auteur d'un cadeau publicitaire avec un correspondant receveur du cadeau publicitaire, et **en ce que** l'adresse internet choisie est celle avec laquelle est appelée la page d'accueil (home page) sur internat du correspondant auteur du cadeau publicitaire.
